# EUROPEAN PATENT SPECIFICATION

(11) **EP 2 826 733 B1**
(45) Date of publication and mention of the grant of the patent: **18.05.2016**
(21) Application number: 14177360.6
(22) Date of filing: 17.07.2014
(51) Int. Cl.: B65G 15/42, B65G 21/14, B65G 23/44, A01D 46/24, B65G 69/16

(54) **Conveyor belt**
Förderband
Courroie de transporteur

(30) Priority: 19.07.2013 IT VR20130169
(43) Date of publication of application: 21.01.2015
(73) Proprietor: Revo S.r.l., 38028 Revo (TN) (IT)
(72) Inventor: Flaim, Marco, 38011 Cavareno (TN) (IT); Martini, Giorgio, 38028 Revò (TN) (IT)
(74) Representative: Fisauli, Beatrice A. M.

(56) References cited:
- DE-A1- 4 439 970
- FR-A1- 2 956 103
- GB-A- 1 454 834
- US-A1- 2004 094 391

## Description

The present invention refers, in general, to a conveyor belt. It refers to a conveyor belt structure according to the preamble of claim 1 applied to a fruit and vegetable collecting machine in particular.

Below, in the description of the invention and the related prior art, we will refer to the fruit and vegetable sector, in particular to apple picking, but the invention of course is also applicable in areas other than that of fruit collecting.

As known, a lot of care must be taken when handling and transporting collected fruit, since the fruit is removed from the plant to be placed in the collection container. In fact, even small shocks suffered by the fruit can cause a rapid deterioration of the fruit itself.

To prevent the collector from having to carry fruit that has just been detached from plants to the collection container where he must delicately store it, conveyor belts can be used which, however, also have limitations.

One of the main problems of conveyor belts lies in the passage of the fruit from the conveyor belt into the collection container. In fact, this passage cannot be performed by letting the fruit drop. We must therefore try to keep the output end of the conveyor belt as close as possible to the highest apples placed in the crate. In addition, this aspect should also be paired with a raising of the filling level of the collection container, and this can only be obtained by lifting the conveyor belt.

In the event that a single conveyor belt is used, when the output end is lifted from the conveyor belt, the entire belt raises and, therefore, also the apple input area. As a result, the management of positioning of the incoming apples on the conveyor belt becomes complex and difficult.

In addition, in the event that a single conveyor belt is used, it must be curved so as to have a substantially horizontal portion where those involved in collection directly or indirectly (with other conveyor belts) arrange the apples being transported, and a substantially vertical portion which brings the collected apples inside the collection container. In this way, a curved portion of the conveyor belt must be created, made thanks to the arrangement of wheels accompanying the belt in its path. These wheels however create tension on the conveyor belt which can cause breakage of the belt itself.

In addition, to fully support the belt also in the curving area, we must have support rollers also at the centre of the belt, an aspect which further complicates the configuration of the entire structure.

In fact, the difficulties found in correctly supporting the belt lie in the fact that the belt itself has an externally "bumped" conformation so as to create cavities which accommodate the fruit being transported.

As a result, to centrally support the belt, a cut in the centre of the belt itself must be made, or rather we need an absence of bumps in the central area. To prevent all these problems, collection machines are provided which comprise two conveyors arranged in series one after the other. One is set substantially horizontally and the other substantially vertically. The first conveyor belt, set horizontally, transports the fruit just picked by the various collectors up to the second conveyor belt, set vertically, which sets the fruit into the collection container through its lower end.

In this way, the first conveyor belt stays in its position, while the second conveyor belt, set vertically, can lift following the raising of the filling level of the collection container.

While such a structure prevents apples from falling from the conveyor belt into the container, it is at the same time complex and expensive: in fact, two conveyor belts are provided, and both must be moved and synchronised to one another. In addition, the passage of fruit from the first conveyor belt to the second conveyor belt is not easy to manage, as it may cause undesirable impact on the fruit itself. DE 44 39 970 A1 **shows a conveyor belt structure, according to the preamble of claim 1, wich ends can move.** One purpose of the invention is to overcome the drawbacks mentioned above and others still, thanks to a conveyor belt for fruit collection machines that allows fruit transport from the collector to the inside of the collection container without fruit undergoing any shock.

Another purpose of the invention is to create a simple configuration conveyor belt to reduce construction and maintenance costs.

A further purpose of the invention is to create a conveyor belt which is fluid in its movements.

A further purpose of the invention is to create a conveyor belt that follows the raising of the collection container filling level in the event that the belt is used for fruit collection.

These and other purposes are all reached, according to the invention, by the use of a conveyor belt structure as stated in claim 1 comprising a conveyor belt fixed to a frame, rotating around a first drum and a second drum, and divided into a first more extreme portion comprising the first drum, a second connecting portion, and a third portion arranged at the opposite end in respect to the first portion and comprising the second drum.

The structure of the conveyor belt also comprises moving means which move the first drum and are fixed to the frame, and elastic means which connect the second drum to the frame.

Thanks to this configuration, so that an actuation of the moving means determines a displacement of the first drum and consequently a displacement of the second drum while keeping the whole conveyor belt in tension through elastic means.

The third portion develops in a substantially vertical direction. In this way, an actuation of the moving means determines a lifting or lowering of the second drum. In this case, the conveyor belt structure is useful for the movement and collection of products, for example fruit, to bring it to a certain position, for example from the collector to inside the collection container.

The substantially vertical arrangement of the third portion allows for its positioning inside the collection container. At the same time, it is possible to lift the lower end of the belt activating the moving means, for example a hydraulic cylinder. In this way, the lower end of the conveyor belt always keeps the same distance from the highest collected products, for example from fruit, in the container.

In addition, the first portion can develop in a direction different from that of the third portion. In this way, the second portion develops in a curved line. If necessary, conveyor belt support means can be present near the third portion. In this way, the conveyor belt can curve smoothly.

As stated previously, the conveyor belt can include reliefs to create cavities where product can be arranged for transport. In this case, advantageously, the support means can include a supporting element which rotates around a pin and comprises two lateral plates which are connected to each other through at least one longitudinal body which goes into contact with the conveyor belt.

Thanks to this configuration, it is the longitudinal body that abuts with the conveyor belt to thus support it. **The conveyor belt structure according to the invention, is characterized by the fact that** the supporting element includes two lateral plates connected to one another by at least four longitudinal bodies. The end of each of said longitudinal bodies are respectively and rotatably fixed to each of the two lateral plates. In particular, the conveyor belt can comprise lower reliefs and higher reliefs, between which cavities are formed for transporting products. The longitudinal bodies can abut on the lower reliefs. In this way, the lower reliefs support the conveyor belt near the second portion and, at the same time, the higher reliefs do not interfere with motion as they are arranged in the free space between the longitudinal bodies.

Advantageously, the perimeter edge of the two lateral plates of the supporting element can support the lateral portion of the conveyor belt, said lateral portion being devoid of reliefs.

In addition, the elastic means can comprise a tensioning device comprising a first elastic means, for example a pneumatic cylinder, which is fixed to the frame at one end and is fixed at the other end to a plaque. This plaque is in turn fixed to an end of a second elastic means, for example a pneumatic cylinder, whose opposite end is fixed to the second drum. In particular, the first elastic means and the second elastic means are arranged side by side so as to lie on a same plane parallel to the direction of movement of the conveyor belt. Thanks to this arrangement, the elastic means occupy the least space possible in width.

Advantageously, the elastic means can comprise a tensioning device comprising a first plate, a second plate, a third plate, two first pneumatic cylinders, two second pneumatic cylinders and two third pneumatic cylinders. The first two pneumatic cylinders are fixed through one of their ends to the upper vertices of the first plate and are fixed though the other end to the second plate. In this way, they elastically connect the first plate to the second plate. The two second pneumatic cylinders can be fixed through one of their ends to the upper vertices of the second plate and being fixed through the other end to the lower vertices of the third plate. In this way, they elastically connect the second plate to the third plate. The two third pneumatic cylinders can be fixed through one of their ends to the upper vertices of the third plate and being fixed through the other end to the axis. The second drum is fixed rotatably to this axis.

Advantageously, the first pneumatic cylinders, the second pneumatic cylinders and the third pneumatic cylinders are arranged side by side so as to lie on a same plane parallel to the direction of movement of the conveyor belt. In this way, the width of the conveyor belt is reduced, in particular the width of the third portion which must enter inside the collection container.

For exemplary and non-exhaustive purposes, the invention's additional specifications and features are provided in greater detail within the description below, as well as within the attached diagrams, which include:
fig. 1 is a lateral view of the conveyor belt, according to the invention, for fruit transport;
fig. 2 is a sectional view of the conveyor belt in figure 1;
fig. 3 is a view of the detail indicated with A in figure 2;
fig. 4 is a view of the detail indicated with B in figure 2;

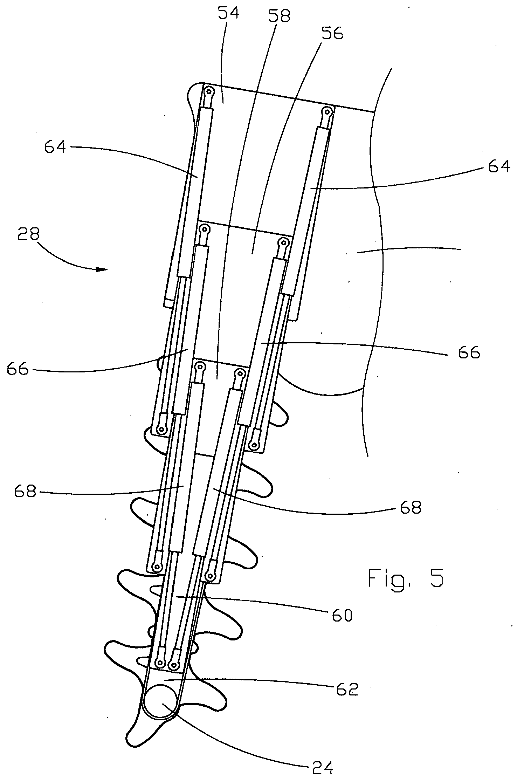

fig. 5 is a lateral portion view of the conveyor belt in figure 1.

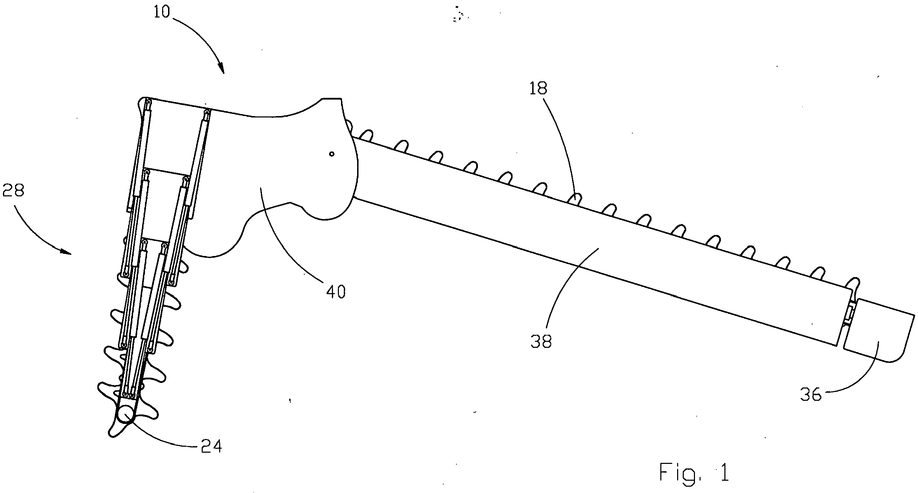

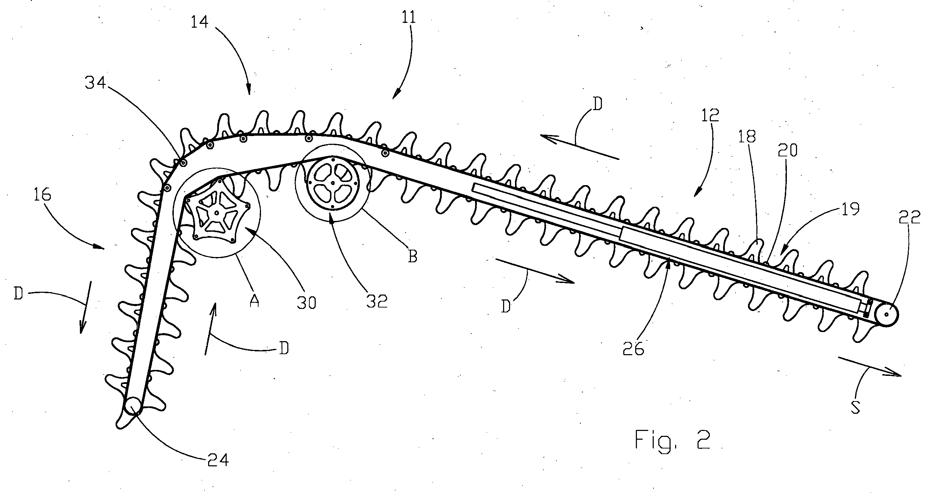

With reference to the attached figures, in particular to figure 1, 10 indicates as a whole a conveyor belt structure for the transport of fruit, apples in particular. The conveyor belt structure 10 comprises a conveyor belt 11 which moves according to direction D indicated in figure 2 and which, to make description easier, is sub-divided into three portions: a first portion 12 arranged substantially horizontally, though slightly inclined, a second curved portion 14 and a third portion 16 arranged substantially vertically, though also this one slightly inclined.

The second curved portion 14 has the task of changing the direction of the conveyor belt.

In particular, during the product transport phase, for example apples, the top portion of the belt goes from a substantially horizontal position on the first portion 12 to a substantially vertical position of the third portion 16. During the return phase, the lower portion of the belt goes from the substantially vertical position to a substantially horizontal position.

The conveyor belt 11 comprises a series of modules connected to one another, each of which has a substantially wave-shaped relief 18. The connection between modules gives rise to a series of reliefs 18 arranged along the belt, spaced from one another so as to create cavities 19. Products, typically apples, are collected in these cavities and transported with the top portion of the belt.

Each cavity 19 also is arranged with a projection 20 which is transverse to the belt and parallel to the reliefs 18, corresponding to the hinge that joins the single modules forming the conveyor belt.

For ease of illustration, in the figures, in particular in figure 2, relief 18, a cavity 19 and a projection 20 only are indicated with numerical reference. The conveyor belt 11 is set in motion by a motorised drum 22, arranged at the end of the first portion 12. Constraint is given at the opposite end of the belt 11 by means of an idle drum 24.

The motorised drum 22 is fixed to a hydraulic cylinder 26. The idle drum 24 is taut downward by a tensioning device 28, described later.

This configuration allows for movement in the vertical direction of the lower end of the third portion 16 of the belt, or rather of the idle drum 24.

In fact, the hydraulic cylinder 26 can move the motorised drum 22 according to direction S and, consequently, the opposite end of the belt, or rather the idle drum 24, can move in agreement.

In other words, when the end of the third portion 16 of the belt is substantially in contact with the apples arranged in the collection container, it must be lifted. The hydraulic cylinder 26 therefore pushes toward the end of the motorised rum 22 and the entire conveyor belt 11 moves harmonically. The idle drum 24 is thus moved upward, though tension is maintained inside the belt thanks to the presence of the tensioning device 28.

When, instead, we want the third portion 16 to go to the maximum of its extension, the hydraulic cylinder 26 moves toward the inside of the motorised drum 22 and, consequently, the idle drum 24 can be pushed downward by the tensioning device 28.

This described movement of the end of the conveyor belt 11 is guaranteed by the presence of devices which keep the second portion 14 in a curved position.

The second portion 14 of the conveyor belt 11 is curved as the lower portion of the belt is supported by the first supporting element 30, rotating around a r pin 31 and by a second supporting element 32, rotating around a pin 33, while the top portion of the belt is supported by six rollers, of which one is indicated with numerical reference 34.

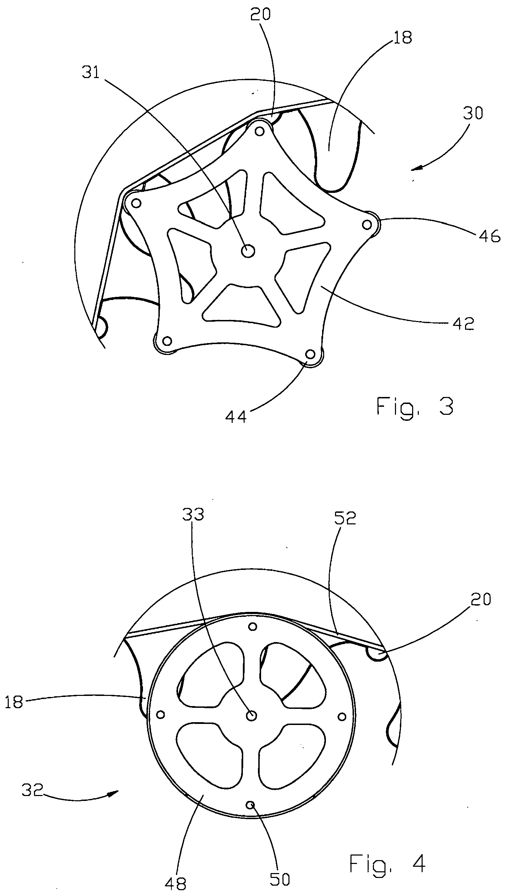

The first supporting element 30, illustrated in figure 3, comprises two lateral pentagonal plates 42, or rather a substantially pentagonal plan, opposite to one another and connected by five cylindrical bodies 46.

Each body is hinged at one part and one of the five vertices 44 of a pentagonal lateral plate 42 to another of the five vertices on the opposite pentagonal lateral plate.

The support given by the first supporting element 30 to the belt 11 is obtained thanks to the support given by the five cylindrical bodies 46 that abut on the transverse projections 20, as illustrated in figure 3. At the same time, the reliefs 18 are not obstacled in their movement, as there is front and rear space for movement between the same cylindrical bodies 46 and laterally between the two pentagonal lateral plates 42.

The second supporting element 32, illustrated in figure 4, comprises two lateral circular plates 48 opposite to one another and connected by five cylindrical bodies 50. The ends of each cylindrical element are fixed to the perimeter edge of each of the two circular lateral plates 48.

The four cylindrical elements 50 are spaced from one another by a 90° angle. This allows the reliefs 18 to be arranged among the cylindrical elements 50, similarly to what takes place for the first supporting element 30.

The support offered by the second supporting element 32 to the conveyor belt 11 is obtained thanks both to the four cylindrical elements 50 that abut on the inside part of the belt 11 and to the perimeter of the two circular lateral plates 48 which support the outer edge 52 of the belt 11, the outer edge 52 which is free of reliefs 18 and projections 20.

The first supporting element 30 and the second supporting element 32, having different structures, have different effects on conveyor belt 11 motion. In fact, while the first supporting element 30 determines the passage of the belt 11, the second supporting element 32 maintains it.

The conveyor belt 11 is laterally protected by some cover plates fixed to the frame of the entire structure to the conveyor belt 11. In particular, the motorised drum 22 is covered by a casing 36, the first portion 12 is laterally covered by a first longitudinal slab 38 and the second portion 14 is laterally protected by a second slab 40. The third portion 16 instead is covered by the tensioning device 28.

As previously illustrated, the tensioning device 28 keeps the third portion 16 of the conveyor belt 11 tensioned. This action is caused by the device 28 which pushes the idle drum 24 downward.

The tensioning device 28 comprises a set of rectangular shaped plates. These plates are connected to one another by means of pneumatic cylinders, loaded so as to push downward.

More specifically, the tensioning device 28 comprises a first plate 54 fixed to the frame of the structure 10 and to a second cover slab 40. Two first pneumatic cylinders 64 are fixed through one of their ends to the upper vertices of the first plate 54 and are fixed though the other end to the second plate 56. In this way, they elastically connect the first plate 54 to the second plate 56.

Similarly, the two second pneumatic cylinders 66 are fixed through one of their ends to the upper vertices of the second plate 56 and are fixed though the other end to the third plate 58. In this way, they elastically connect the second plate 56 to the third plate 58.

Similarly, the two third pneumatic cylinders 68 are fixed through one of their ends to the upper vertices of the third plate 58 and are fixed though the other end to the fourth plate 60. In this way, they elastically connect the third plate 58 to the fourth plate 60.

The fourth plate 60 is fixed to an axis 62, to which an idle drum 24 of the third portion 16 of the conveyor belt 10 is fixed rotatably.

Thanks to the tensioning device 28, however, the idle drum 24 is pushed downward by a series of plates and pneumatic cylinders, with respect to the first plate 54 and the frame of the conveyor belt 10 structure.

In this way, during apple unloading into the collection container, the third portion 16 of the conveyor belt 11 is set with its free end almost in contact with the bottom of the same container. During collection, the same end, corresponding to the idle drum 24, must be lifted for the raising of the filling level. This movement is obtained by activating the hydraulic cylinder 26 which pushes the motorised drum 22 and the entire conveyor belt 11 according to the arrow S.

The devices which guarantee conveyor belt 11 curving in correspondence with the second portion 14, or rather the six rollers 34, the first supporting element 30 and the second supporting element 32, instead stay fixed to the frame.

As a result, the third portion 16 of the conveyor belt 11 is pulled, but kept however taut by the tensioning device 28, thus lifting the idle drum 24.

This same tensioning device 28 has an innovative configuration with respect to prior art. In fact, the second plate 56 being more narrow than the first plate 54, the second pneumatic cylinders 66 are arranged more internally than the first pneumatic cylinders 64, though they remain side by side.

Similarly, the third plate 58 being more narrow than the second plate 56, also the third pneumatic cylinders 68 are arranged more internally than the second pneumatic cylinders 66, though they remain side by side.

As a result, the first pneumatic cylinders 64, the second pneumatic cylinders 66 and the third pneumatic cylinders 68 are all side by side to one another and substantially lie on the same plane. In this way, the spaced occupied with respect to prior art, which involves development also in depth, is reduced, causing an undesired enlargement of the collection machine and an unwelcome reduction of the width of the conveyor belt.

This aspect is even more important if we consider that the part involved by the tensioning device 28 corresponds to the third portion 16, which must have a width that is not excessive, as it must be set inside the collection container. A field technician may provide for various modifications and alterations which are nevertheless to be considered within the scope of the invention as described by the appended claims. For example, there can be more than one curving of the conveyor belt, still however maintaining the particular characteristic of the mobility of the two ends of the belt. In other words, even with multiple curving portions of the belt, one end of the belt can be pushed to obtain a corresponding lifting of the opposite end, set inside the fruit collection container.

## Claims

1. Conveyor belt structure (10) comprising a conveyor belt (11), fixed to a frame, rotating around a first drum (22) and a second drum (24), and divided into a first more extreme portion (12) comprising the first drum (22), a second connecting portion (14), and a third portion (16) arranged at the opposite end in respect to the first portion (12) and comprising the second drum (24),
said conveyor belt structure (10) comprising moving means (26) which move the first drum (24) and are fixed to the frame, and elastic means (28) which connect the second drum (24) to the frame so that an actuation of the moving means (26) determines a displacement of the first drum (22) and consequently a displacement of the second drum (24) while keeping the whole conveyor belt (11) in tension through the elastic means (28);
wherein the third portion (16) develops in a substantially vertical direction so that an actuation of the moving means (26) determines a lifting or lowering of the second drum (24);
wherein the first portion (12) develops in a direction different from that of the third portion (16) so that the second portion (14) develops in a curved line, supporting means (30, 32, 34) of the conveyor belt (11) being provided at the third portion (14);
wherein the conveyor belt (11) comprises at least one projection (18, 20) and wherein said supporting means comprise a supporting element (30, 32) which rotates around a pin (31, 33) and comprises two lateral plates (42, 48) which are connected to each other through at least one longitudinal body (46, 50) which goes into contact with the conveyor belt (11);
said conveyor belt structure (10) being **characterized by** the fact that the supporting element (30, 32) comprises two lateral plates (42, 48) which are connected to each other through at least four longitudinal bodies (46, 50), the ends of each of said longitudinal bodies (46, 50) being fixed, respectively and rotatably, to each of the two lateral plates (42) and adapted to abut on the at least one projection (18, 20).

2. Conveyor belt structure (10) according to the preceding claim, wherein the perimeter edge of the two lateral plates (48) of the supporting element (32) supports the lateral portion (52) of the conveyor belt, said lateral portion (52) being devoid of the at least one projection (18, 20).

3. Conveyor belt structure (10) according to one of the preceding claims, wherein the elastic means comprise a tensioning device (28) comprising a first elastic means (64) which is fixed to the frame at one end and is fixed, at the other end, to a plaque (56, 58) which in turn is fixed to an end of a second elastic means (66) whose opposite end is fixed to the second drum (24), the first elastic means (64) and the second elastic means (66) being arranged side by side so as to lie on a same plane parallel to the direction of movement of the conveyor belt (11).

4. Conveyor belt structure (10) according to the preceding claim, wherein the first elastic means comprises a first pneumatic cylinder (64) and the second elastic means comprises a second pneumatic cylinder (66) or a third pneumatic cylinder (68).

5. Conveyor belt structure (10) according to one of the preceding claims, wherein the elastic means comprise a tensioning device (28) comprising a first plate (54), a second plate (56), a third plate (58), two first pneumatic cylinders (64), two second pneumatic cylinders (66) and two third pneumatic cylinders (68); the first two pneumatic cylinders (64) being fixed through one of their ends to the upper vertices of the first plate (54) and being fixed though the other end to the lower vertices of the second plate (56) so as to elastically connect the first plate (54) to the second plate (56); the two second pneumatic cylinders (66) being fixed through one of their ends to the upper vertices of the second plate (56) and being fixed through the other end to the lower vertices of the third plate (58) so as to elastically connect the second plate (56) to the third plate (58); the two third pneumatic cylinders (68) being fixed through one of their ends to the upper vertices of the third plate (58) and being fixed through the other end to an axis (62) to which the second drum (24) is fixed rotatably.

6. Conveyor belt structure (10) according to the preceding claim, wherein the first pneumatic cylinders (64), the second pneumatic cylinders (66) and the third pneumatic cylinders (68) are arranged side by side so as to lie on a same plane parallel to the direction of movement of the conveyor belt (11).

## Patentansprüche

1. Förderbandaufbau (10), beinhaltend ein an einem Rahmen befestigtes Förderband (11), das sich um eine erste Walze (22) und eine zweite Walze (24) dreht und in einen ersten äußeren Abschnitt (12), der die erste Walze (22) enthält, einen zweiten verbindenden Abschnitt (14) und einen dritten Abschnitt (16) unterteilt ist, der am dem ersten Abschnitt (12) gegenüber liegenden Ende angeordnet ist und die zweite Walze (24) enthält, besagter Förderbandaufbau (10), der Antriebsvorrichtungen (26) enthält, die die erste Walze (24) bewegen und am Rahmen befestigt sind und elastische Mittel (28), die die zweite Walze (24) mit dem Rahmen verbinden, derart, dass eine Betätigung der Antriebsvorrichtungen (26) eine Versetzung der ersten Walze (22) und folglich eine Versetzung der zweiten Walze (24) bewirkt, wobei das gesamte Förderband (11) durch die elastischen Mittel (28) in Zug gehalten wird;
wobei der dritte Abschnitt (16) sich wesentlich in senkrechter Richtung erstreckt, sodass eine Betätigung der Antriebsmittel (26) ein Anheben oder Absenken der zweiten Walze (24) bewirkt;
wobei der erste Abschnitt (12) sich in einer anderen Richtung als der des dritten Abschnitts (16) erstreckt, sodass der zweite Abschnitt (14) in einer Kurve verläuft, wobei auf der Höhe des dritten Abschnitts (14) Halterungen (30, 32, 34) des Förderbands (11) vorhanden sind;
wobei das Förderband (11) mindestens einen Vorsprung (18, 20) enthält und wobei besagte Halterungen ein Halterungselement (30, 32) beinhalten, das sich um einen Stift (31, 33) dreht und aus zwei Seitenplatten (42, 48) besteht, die miteinander durch mindestens einen länglichen Körper (46, 50) verbunden sind, die mit dem Förderband (11) in Berührung kommen; besagter Förderbandaufbau (10) **dadurch gekennzeichnet ist, dass** das Halterungselement (30, 32) zwei Seitenplatten (42, 48) beinhaltet, die miteinander durch mindestens vier längliche Körper (46, 50) verbunden sind, die Enden eines jeden der länglichen Körper (46, 50) jeweils und drehbar an den beiden Seitenplatten (42) befestigt sind und geeignet sind, an mindestens einem Vorsprung (18, 20) anzuschlagen.

2. Förderbandaufbau (10) gemäß dem vorherigen Anspruch, wobei der umlaufende Rand der beiden Seitenplatten (48) des Halterungselements (32) den seitlichen Teil (52) des Förderbands stützt, da dem besagten seitlichen Teil (52) mindestens ein Vorsprung (18, 20) fehlt.

3. Förderbandaufbau (10) gemäß einem der vorherigen Ansprüche, wobei die elastischen Mittel eine Spannvorrichtung (28) beinhalten, die ein erstes elastisches Mittel (64) enthält, das an einem Ende am Rahmen befestigt ist und am anderen Ende an einer Platte (56, 58) befestigt ist, die ihrerseits an einem Ende eines zweiten elastischen Mittels (66) befestigt ist, dessen gegenüberliegendes Ende an der zweiten Walze (24) befestigt ist, das erste elastische Mittel (64) und das zweite elastische Mittel (66) nebeneinander angeordnet sind, sodass sie auf einer selben Ebene parallel zur Bewegungsrichtung des Förderbands (11) liegen.

4. Förderbandaufbau (10) gemäß dem vorherigen Anspruch, wobei das erste elastische Mittel einen ersten Druckluftzylinder (64) enthält und das zweite elastische Mittel einen zweiten Druckluftzylinder (66) oder einen dritten Druckluftzylinder (68) enthält.

5. Förderbandaufbau (10) gemäß einem der vorherigen Ansprüche, wobei die elastische Mittel eine Spannvorrichtung (28) enthalten, die ihrerseits eine erste Platte (54), eine zweite Platte (56), eine dritte Platte (58), zwei erste Druckluftzylinder (64), zwei zweite Druckluftzylinder (66) und zwei dritte Druckluftzylinder (68) enthält; wobei die ersten zwei Druckluftzylinder (64) mit einem ihrer Enden an den oberen Scheitelpunkten der ersten Platte (54) und mit dem anderen Ende an den unteren Scheitelpunkten der Zweiten Platte (56) befestigt sind, sodass sie die erste Platte (54) mit der zweiten Platte (56) elastisch verbinden; wobei die zweiten Druckluftzylinder (66) mit einem ihrer Enden an den oberen Scheitelpunkten der zweiten Platte (56) und mit ihrem anderen Ende an die unteren Scheitelpunkte der dritten Platte (58) befestigt sind, sodass sie die zweite Platte (56) mit der dritten Platte (58) elastisch verbinden; wobei die dritten Druckluftzylinder (68) mit einem Ende an den oberen Scheitelpunkten der dritten Platte (58) und mit ihrem anderen Ende an einer Achse (62) befestigt sind, an der die zweite Walze (24) drehbar befestigt ist.

6. Förderbandaufbau (10) gemäß den vorherigen Ansprüchen, wobei die ersten Druckluftzylinder (64), die zweiten Druckluftzylinder (66) und die dritten Druckluftzylinder (68) nebeneinander angeordnet sind, sodass sie parallel zur Bewegungsrichtung des Förderbands (11) liegen.

## Revendications

1. Structure de la bande transporteuse (10) comprenant une bande transporteuse (11), fixée à un châssis, tournant autour d'un premier tambour (22) et un second tambour (24) et divisé en une première partie plus grande (12) comprenant le premier tambour (22), d'une seconde partie de liaison (14), et d'une troisième partie (16) disposée à l'extrémité opposée par rapport à la première partie (12) et comprenant le deuxième tambour (24), ladite structure de bande transporteuse (10) comprenant des moyens de déplacement (26) qui déplacent le premier tambour (24) et sont fixés au châssis, et des moyens élastiques (28) qui relient le second tambour (24) sur le châssis de telle sorte qu'un actionnement des moyens de déplacement (26) détermine un déplacement du premier tambour (22) et par conséquent un déplacement du deuxième tambour (24) tout en conservant l'ensemble de la bande transporteuse (11) sous tension à travers les moyens élastiques (28) ;
dans laquelle la troisième partie (16) se développe dans une direction sensiblement verticale, de sorte qu'un actionnement des moyens de déplacement (26) détermine un dispositif de levage ou l'abaissement du second tambour (24) ;
dans laquelle la première partie (12) se développe dans une direction différente de celle de la troisième partie (16) de sorte que la seconde partie (14) se développe dans une ligne courbe, supportant des moyens (30, 32, 34) de la bande transporteuse (11) étant prévu à la troisième partie (14) ;
dans laquelle la bande transporteuse (11) comprend au moins une saillie (18, 20) et dans lesdits moyens de support comprennent un élément de support (30, 32) qui tourne autour d'un axe (31, 33) et comprend deux plaques latérales (42, 48 ) qui sont reliées les unes aux autres par au moins un corps longitudinal (46, 50) qui entre en contact avec la bande transporteuse (11); ladite structure de bande transporteuse (10) étant **caractérisée par le fait que** l'élément de support (30, 32) comprend deux plaques latérales (42, 48) qui sont reliées entre elles par au moins quatre organes longitudinaux (46, 50), les extrémités de chacun desdits corps longitudinaux (46, 50) étant fixés respectivement et de manière rotative, à chacune des deux plaques latérales (42) et adaptés pour venir en butée sur au moins une partie saillante (18, 20).

2. Structure de la bande transporteuse (10) selon la revendication précédente, dans lequel le bord périphérique des deux plaques latérales (48) de l'élément de support (32) supporte la partie latérale (52) de la bande transporteuse, ladite partie latérale (52) étant dépourvu d'au moins une saillie (18, 20).

3. Structure de la bande transporteuse (10) selon l'une des revendications précédentes, dans laquelle les moyens élastiques comprennent un dispositif de serrage (28) comprenant un premier moyen élastique (64) qui est fixé au châssis à une extrémité et est fixé à une autre extrémité, à une plaque (56, 58) qui, à son tour, est fixée à une extrémité d'un second moyen élastique (66) dont l'extrémité opposée est fixée au deuxième tambour (24), les premiers moyens élastiques (64) et le second des moyens élastiques (66) étant disposés côte à côte de façon à se trouver dans un même plan parallèle à la direction de déplacement de la bande transporteuse (11).

4. Structure de la bande transporteuse (10) selon la revendication précédente, dans laquelle le premier moyen élastique comprend un premier vérin pneumatique (64) et le second moyen élastique comprend un deuxième vérin pneumatique (66) ou d'un troisième vérin pneumatique (68).

5. Structure de la bande transporteuse (10) selon l'une des revendications précédentes, dans laquelle les moyens élastiques comprennent un dispositif de serrage (28) comprenant une première plaque (54), une seconde plaque (56), une troisième plaque (58), deux premiers vérins pneumatiques (64), deux seconds vérins pneumatiques (66) et deux troisièmes vérins pneumatiques (68) ; les deux premiers vérins pneumatiques (64) étant fixés par une de leurs extrémités aux sommets supérieurs de la première plaque (54) et étant fixés bien que l'autre extrémité aux sommets inférieurs de la seconde plaque (56) de manière à connecter de manière élastique la première plaque (54) à la seconde plaque (56) ; les deux deuxièmes vérins pneumatiques (66) étant fixés par une de leurs extrémités aux sommets supérieurs de la seconde plaque (56) et étant fixés par l'autre extrémité aux sommets inférieurs de la troisième plaque (58) de manière à connecter de manière élastique la deuxième plaque (56) à la troisième plaque (58) ; les deux troisièmes vérins pneumatiques (68) étant fixés par une de leurs extrémités aux sommets supérieurs de la troisième plaque (58) et étant fixés par l'autre extrémité à un axe (62) auquel le deuxième tambour (24) est fixé de manière rotative.

6. Structure de la bande transporteuse (10) selon la revendication précédente, dans laquelle les premiers vérins pneumatiques (64), les seconds vérins pneumatiques (66) et les troisièmes vérins pneumatiques (68) sont disposés côte à côte de façon à se situer sur un même plan parallèle à la direction de déplacement de la bande transporteuse (11).
